# EUROPEAN PATENT APPLICATION

(11) **EP 4 209 923 A1**
(43) Date of publication of application: **12.07.2023**
(21) Application number: 21863458.2
(22) Date of filing: 05.08.2021
(51) Int. Cl.: G06F 16/2455

(54) **METHOD FOR SHARING PREPARE STATEMENT, SYSTEM, NETWORK DEVICE, AND STORAGE MEDIUM**

(30) Priority: 03.09.2020 CN 202010915259
(71) Applicant: ZTE Corporation, Shenzhen, Guangdong 518057 (CN)
(72) Inventor: WANG, Ye, Shenzhen, Guangdong 518057 (CN); DUAN, Xuhui, Shenzhen, Guangdong 518057 (CN); LV, Da, Shenzhen, Guangdong 518057 (CN); ZHAO, Pei, Shenzhen, Guangdong 518057 (CN)
(74) Representative: Ipsilon
(86) International application number: PCT/CN2021/110957
(87) International publication number: WO 2022/048390

(57) **Abstract**

The present application relates to the field of communication technology, and provides a method and a system for sharing Prepare Statement, a network device and a storage medium. The method for sharing Prepare Statement includes: receiving (101) an execution request, wherein the execution request carries an identification of a global Prepare Statement object and execution parameters; searching (102) a global Prepare Statement object cache pool for the corresponding global Prepare Statement object according to the identification of the global Prepare Statement object to acquire the global Prepare Statement object, wherein the global Prepare Statement object is a compiled structured query language, SQL, statement; and determining (103) an execution plan according to the global Prepare Statement object and the execution parameters, and executing (103) the same.

## Description

### CROSS-REFERENCE TO RELATED APPLICATION

The present application is based on and claims priority to Chinese Patent Application No. 202010915259.4, filed on September 3, 2020, the entire contents of which are incorporated herein by reference.

### TECHNICAL FIELD

Embodiments of the present application relate to the field of communication technology, and in particular, relate to a method and a system for sharing Prepare Statement, a network device and a storage medium.

### BACKGROUND

In the use of distributed databases, connection pool is introduced in the middleware to manage database connections. When a client needs to access the database, it selects from the connection pool an idle connection that has already been established; after the use of the database connection is complete, the client puts the connection back into the connection pool for use by the next database access request, thereby realizing reuse of the database connection.

However, in Prepare Statement mode, since the connection is not physically closed, the connection put back into the connection pool will always be occupied by the Prepare Statement object, and the idle connection cannot be released for use by the next database access request, so that it cannot be reused by the next access request and the Prepare Statement cannot be shared.

### SUMMARY

An embodiment of the present application provides a method for sharing Prepare Statement applied to a network device, including: receiving an execution request, wherein the execution request carries an identification of a global Prepare Statement object and execution parameters; searching a global Prepare Statement object cache pool for the corresponding global Prepare Statement object according to the identification of the global Prepare Statement object to acquire the global Prepare Statement object, wherein the global Prepare Statement object is a compiled structured query language (SQL) statement; and determining an execution plan according to the global Prepare Statement object and the execution parameters, and executing the same.

An embodiment of the present application further provides a system for sharing Prepare Statement including: a client configured to send a prepared request to a middleware, receive a creation success response, and send an execution request to the middleware according to the creation success response; and a network device configured to: receive the execution request, wherein the execution request carries an identification of a global Prepare Statement object and execution parameters; searching a global Prepare Statement object cache pool for the global Prepare Statement object according to the identification of the global Prepare Statement object to acquire the global Prepare Statement object, wherein the global Prepare Statement object is a compiled structured query language (SQL) statement; and determining an execution instruction according to the global Prepare Statement object and the execution parameters, and executing the same.

An embodiment of the present application further provides a network device including: at least one processor; and a memory communicably connected to the at least one processor; wherein, the memory stores instructions executable by the at least one processor, wherein, when executed by the at least one processor, the instructions enable the at least one processor to execute the aforementioned method for sharing Prepare Statement.

An embodiment of the present application provides a computer readable storage medium storing one or more programs which are executable by one or more processors to implement the operations of the aforementioned method.

### BRIEF DESCRIPTION OF DRAWINGS

Fig. 1 is a first flowchart of a method for sharing Prepare Statement according to a first implementation of the present application;
Fig. 2 is a second flowchart of a method for sharing Prepare Statement according to the first implementation of the present application;
Fig. 3 is a flowchart of a method for sharing Prepare Statement according to a second implementation of the present application;
Fig. 4 is a flowchart of operation 103 in the method for sharing Prepare Statement according to the second implementation of the present application shown in Fig. 3;
Fig. 5 is a flowchart of a method for sharing Prepare Statement according to a third implementation of the present application;
Fig. 6 is a flowchart of a method for sharing Prepare Statement according to a fourth implementation of the present application;
Fig. 7 is a structural diagram of a system for sharing Prepare Statement according to a fifth implementation of the present application; and
Fig. 8 is a structural diagram of a network device according to a sixth implementation of the present application.

### DETAIL DESCRIPTION OF EMBODIMENTS

In order to make the objective, the technical solutions and advantages of the present application clearer, the implementations of the present application will be described in detail below in conjunction with the accompanying drawings. However, it will be appreciated for those of ordinary skill in the art that, in various implementations of the present application, many technical details are presented to make the readers better understand the present application. However, the technical solutions claimed by the present application can be realized even without these technical details and various changes and modifications based on the following implementations. The division of the following implementations is for the convenience of description, and should not constitute any limitation of the specific implementations of the present application, and the various implementations may be combined and referenced to each other without confliction.

The main objective of the implementations of the present application is to propose a method and a system for sharing Prepare Statement, and a network device, for achieving the purpose of acquiring Prepare Statement objects in the global Prepare Statement object cache pool without caching the parsed statements on the current connection, thereby realizing the function of sharing Prepare Statement.

A first implementation of the present application relates to a method for sharing Prepare Statement, which is applied to a network device and functions in the process of accessing a distributed database, wherein the network device of the implementation may be a middleware or a database.

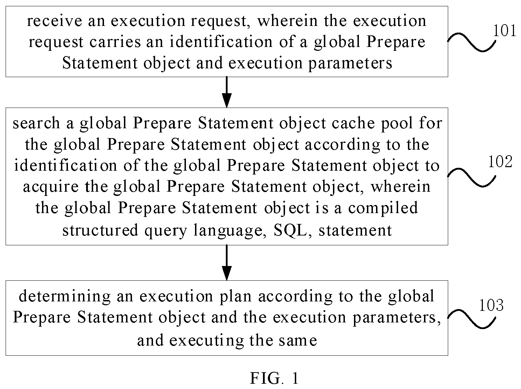

The process is shown in Fig. 1, including operations 101 to 103.

At operation 101, an execution request is received, wherein the execution request carries an identification of a global Prepare Statement object and execution parameters.

In this implementation, the execution parameters are parameters of the SQL statement, which can only be obtained by parsing the request and cannot be obtained directly, and may include: the OleDb Parameter in the Access database, the MySql Parameter in the MySql database, etc. Of course, the above are only specific examples, and the execution parameters may also include other parameters in practical applications, which will not be repeated here.

In the implementation, the identification of the global Prepare Statement object is not limited. In practical applications, the identification of the global Prepare Statement object may be any kind of identification that can uniquely indicate the global Prepare Statement object.

At operation 102, a global Prepare Statement object cache pool is searched for the global Prepare Statement object according to the identification of the global Prepare Statement object to acquire the global Prepare Statement object, wherein the global Prepare Statement object is a compiled structured query language (SQL) statement.

At operation 103, an execution plan is determined according to the global Prepare Statement object and the execution parameters, and the execution plan is executed.

In this implementation, the execution plan is a scheme with the least resource consumption selected from several schemes prepared by the database server for executing SQL statements.

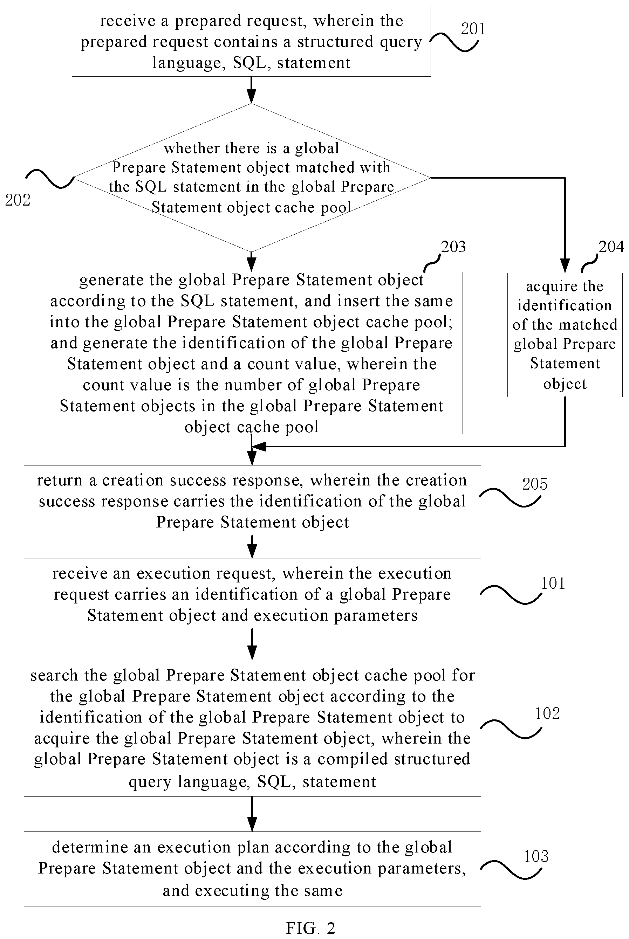

It should be noted that, in this implementation, the global Prepare Statement object cache pool is used for caching the global Prepare Statement objects. The global Prepare Statement objects cached in the global Prepare Statement object cache pool may be stored in advance or acquired from the client. If it is stored in advance, the global Prepare Statement object can be stored by the user manually; if it is acquired from the client, as shown in Fig. 2, before operation 101, the method further includes operations 201 to 205.

At operation 201, a prepared request is received, wherein the prepared request contains a structured query language (SQL) statement.

At operation 202, whether there is a global Prepare Statement object matched with the SQL statement in the global Prepare Statement object cache pool is determined.

If there is no global Prepare Statement object matched with the SQL statement, it indicates that the SQL statement has not been executed, and then operation 203 will be performed; if there is a global Prepare Statement object matched with the SQL statement, it indicates that the SQL statement has been executed, and then operation 204 will be performed.

At operation 203, the global Prepare Statement object is generated according to the SQL statement, and the generated global Prepare Statement object is inserted into the global Prepare Statement object cache pool; and the identification of the global Prepare Statement object and a count value are generated, wherein the count value is the number of global Prepare Statement objects in the global Prepare Statement object cache pool.

In the implementation, the strategy for generating the identification of global Prepare Statement object is not limited, and the strategy can be set or selected according to specific needs in practical applications. For example, the strategy may be that the identifications are generated in the order of generation of the global Prepare Statement objects, or may be that the identifications are generated in accordance with a custom rule, which will not be listed one by one herein.

At operation 204, the identification of the matched global Prepare Statement object is acquired.

At operation 205, a creation success response is returned, wherein the creation success response carries the identification of the global Prepare Statement object.

It should be noted that, in this implementation, a global Prepare Statement object generated in the database and that generated in the middleware are not exactly identical. On the one hand, the global Prepare Statement object also contains the sending and receiving relationships in the SQL statement communication process; on the other hand, the middleware may rewrite the SQL statement, such as generating a different SQL statement or rewriting into multiple SQL statements, so that the SQL statement contained in the prepared request sent to the database may be different from the SQL statement contained in the prepared request sent by the client. Accordingly, the global Prepare Statement object cache pools of the middleware and the database are also different from each other in terms of cached contents.

Compared with the existing art, in the implementation of the present application, when the client accesses the distributed database, by receiving an execution request which carries execution parameters and an identification of a global Prepare Statement object, searching the cache pool for the global Prepare Statement object according to the identification, and obtaining an execution plan by combining the global Prepare Statement object and the execution parameters, and executing the execution plan, there is no need to cache the parsed statements on the current connection and occupy the database connection for the global Prepare Statement object, the global Prepare Statement object cache pool is directly searched for the global Prepare Statement object that has been cached therein. It can be seen that, this technical solution can realize the function of sharing Prepare Statements by acquiring the Prepare Statement object in the global Prepare Statement object cache pool without caching the parsed statements on the current connection, which solves the problem in the existing art of not being able to share Prepare Statements.

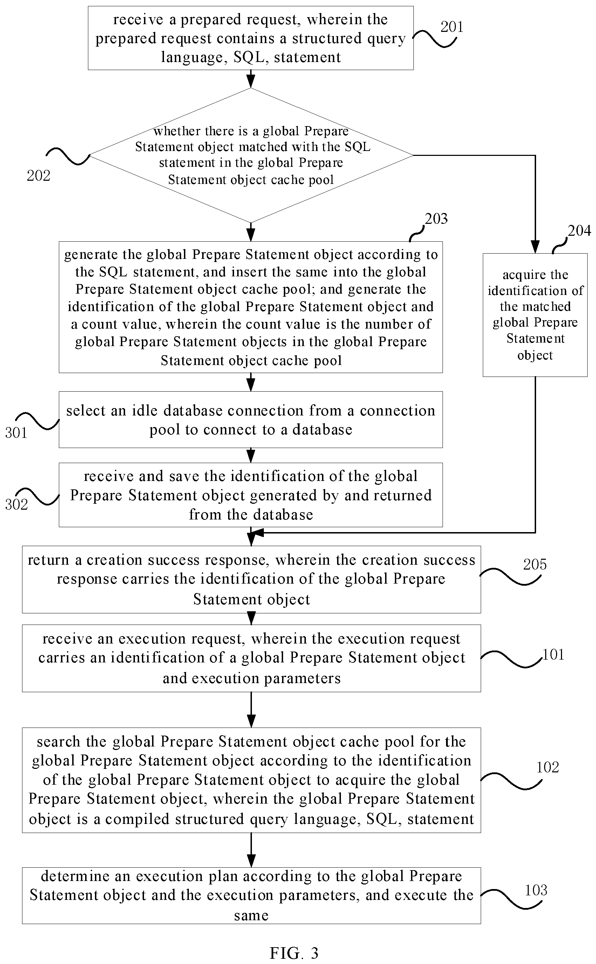

A second implementation of the present application relates to a method for sharing Prepare Statement, which is substantially the same as the method for sharing Prepare Statement in the first implementation of the present application, except that it is applied to a middleware, as shown in Fig. 3.

After operation 203, the method further includes operations 301 and 302.

At operation 301, an idle database connection is selected from a connection pool to connect to a database, and a prepared request is sent to the database.

In this implementation, a plurality of preset database connection objects are saved in the connection pool, from which a database connection may be selected directly for connection to the database.

In this implementation, the SQL statement contained in the prepared request is the SQL statement rewritten by the middleware.

At operation 302, the identification of the global Prepare Statement object generated by and returned from the database is received and saved.

In this implementation, the identification of the global Prepare Statement object generated by the database and the identification of the global Prepare Statement object generated by the middleware will be saved together, thereby saving the corresponding relationship between the global Prepare Statement object generated by the database and the global Prepare Statement object generated by the middleware.

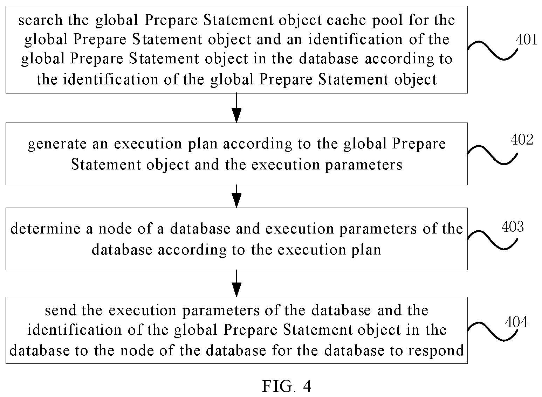

As shown in Fig. 4, operation 103 includes operations 401 to 404.

At operation 401, the global Prepare Statement object cache pool is searched for the global Prepare Statement object and an identification of the global Prepare Statement object in the database according to the identification of the global Prepare Statement object.

At operation 402, an execution plan is generated according to the global Prepare Statement object and the execution parameters.

At operation 403, a node of a database and execution parameters of the database are determined according to the execution plan.

At operation 404, the execution parameters of the database and the identification of the global Prepare Statement object in the database are sent to the node of the database for the database to respond.

It should be noted that, in this implementation, the identification of the global Prepare Statement object in the database may be the same as the identification of the global Prepare Statement object in the middleware; the identification of the global Prepare Statement object in the database may also be different from the identification of the global Prepare Statement object in the middleware. This implementation does not limit the content of the identification of the global Prepare Statement object in the database and that of the identification of the global Prepare Statement object in the middleware.

Compared with the existing art, on the basis of the beneficial effect brought by the first implementation, this implementation of the present application combines the connection pool and the global Prepare Statement objects in the middleware, making full use of existing resources, optimizing the preprocessing process, saving resources, improving efficiency, unbundling the link binding between the middleware and the node of the database, reducing the number of back-end links at the same time, improving the utilization of the connection pool, and reducing the connection pressure on the back-end stand-alone database.

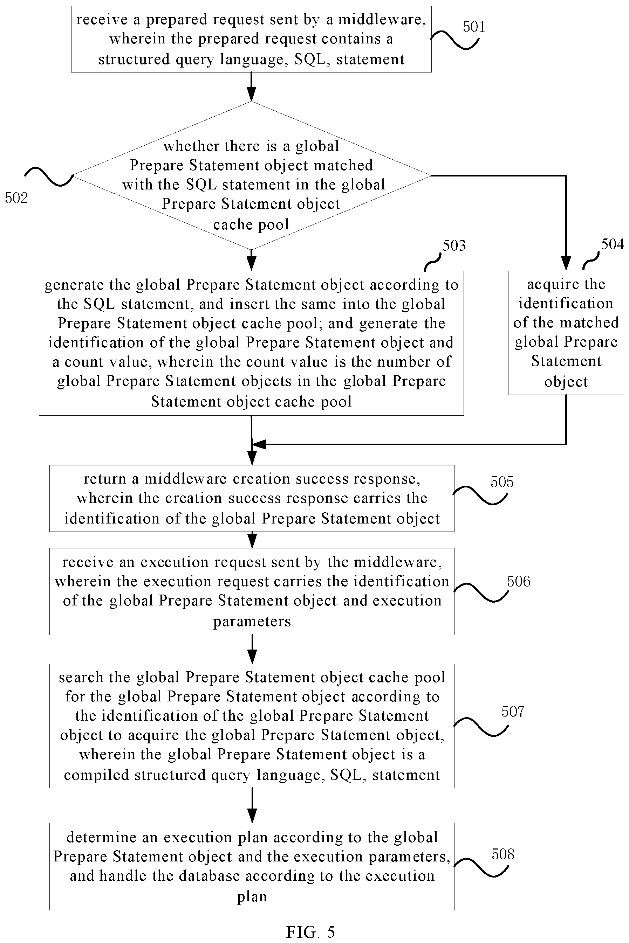

A third implementation of the present application relates to a method for sharing Prepare Statement, which is substantially the same as the method for sharing Prepare Statement in the first implementation of the present application, except that it is applied to a database, as shown in Fig. 5.

At operation 501, a prepared request sent by a middleware is received, wherein the prepared request contains a structured query language (SQL) statement.

This operation is substantially the same as operation 201 in the first implementation, and will not be repeated here.

At operation 502, matching between the SQL statement and all global Prepare Statement objects in the global Prepare Statement object cache pool is performed.

This operation is substantially the same as operation 202 in the first implementation, and will not be repeated here.

At operation 503, the global Prepare Statement object is generated according to the SQL statement and is inserted into the global Prepare Statement object cache pool; and the identification of the global Prepare Statement object and a count value are generated, wherein the count value is the number of global Prepare Statement objects in the global Prepare Statement object cache pool.

This operation is substantially the same as operation 203 in the first implementation, and will not be repeated here.

At operation 504, the identification of the matched global Prepare Statement object is acquired.

This operation is substantially the same as operation 204 in the first implementation, and will not be repeated here.

At operation 505, a middleware creation success response is returned, wherein the creation success response carries the identification of the global Prepare Statement obj ect.

This operation is substantially the same as operation 205 in the first implementation, and will not be repeated here.

At operation 506, an execution request sent by the middleware is received, wherein the execution request carries the identification of the global Prepare Statement object and execution parameters.

This operation is substantially the same as operation 101 in the first implementation, and will not be repeated here.

At operation 507, the global Prepare Statement object cache pool is searched for the global Prepare Statement object according to the identification of the global Prepare Statement object to acquire the global Prepare Statement object, wherein the global Prepare Statement object is a compiled structured query language (SQL) statement.

This operation is substantially the same as operation 102 in the first implementation, and will not be repeated here.

At operation 508, an execution plan is determined according to the global Prepare Statement object and the execution parameters, and the database is handled according to the execution plan.

This operation is substantially the same as operation 102 in the first implementation, and will not be repeated here.

Compared with the existing art, in this implementation of the present application, on the basis of the beneficial effect brought by the first implementation, the database stores the global Prepare Statement object, which is convenient for direct use when the database is accessed next time, reducing the number of hard parsing, optimizing the Prepared Statement process, saving resources and improving efficiency.

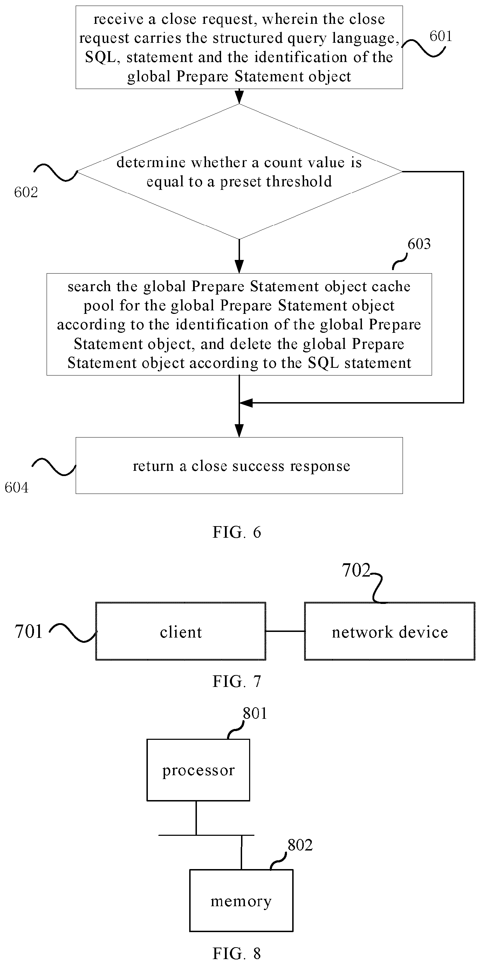

A fourth implementation of the present application relates to a method for sharing Prepare Statement, which is substantially the same as the method for sharing Prepare Statement in the first implementation of the present application, except that it is further required to delete the global Prepare Statement object, as shown in Fig. 6.

At operation 601, a close request is received, wherein the close request carries the structured query language (SQL) statement and the identification of the global Prepare Statement object.

In this implementation, the SQL statement is a delete instruction, and the global Prepare Statement object corresponding to the identification of the global Prepare Statement object is the object on which the delete operation is performed.

At operation 602, whether a count value is equal to a preset threshold is determined.

If the count value is equal to the preset threshold, operation 603 will be executed; if the count value is not equal to the preset threshold, operation 604 will be executed.

In this implementation, the preset threshold is a value that will be updated according to the actual situation each time it is enabled, and that reflects the number of current configurations and cannot be changed arbitrarily.

At operation 603, the global Prepare Statement object cache pool is searched for the global Prepare Statement object according to the identification of the global Prepare Statement object, and the global Prepare Statement object is deleted according to the SQL statement.

At operation 604, a close success response is returned.

It should be noted that, in this implementation, the subject of execution may be a middleware or a database; the difference is that, if the subject of execution is a middleware, the middleware will directly return a close success response when the count value is not equal to the preset threshold and will not send a close request to the database.

Compared with the existing art, on the basis of the beneficial effect brought by the first implementation, this implementation of the present application deletes the global Prepare Statement object that has been cached, freeing up the space of the global Prepare Statement object cache pools in the middleware and the database, facilitating the addition of new global Prepare Statement objects, and enabling the method for sharing Prepare Statement to meet the prepared requests and execution requests of various contents of the client and meet the further needs of the client.

A fifth implementation of the present application relates to a system for sharing Prepare Statement, as shown in Fig. 7, including:
a client 701 configured to send a prepared request to a middleware 702, receive a creation success response, and send an execution request to the middleware 702 according to the creation success response; and
a network device 702 configured to: receive the execution request sent by the client 701, wherein the execution request carries an identification of a global Prepare Statement object and execution parameters; search a global Prepare Statement object cache pool for the global Prepare Statement object according to the identification of the global Prepare Statement object to acquire the global Prepare Statement object, wherein the global Prepare Statement object is a compiled structured query language (SQL) statement; and determine an execution instruction according to the global Prepare Statement object and the execution parameters, and execute the same.

A sixth implementation of the present application relates to a network device, as shown in Fig. 8, including:
at least one processor 801; and
a memory 802 communicatively connected to the at least one processor 801; wherein,
the memory 802 stores instructions executable by the at least one processor 801, wherein, when executed by the at least one processor 801, the instructions enable the at least one processor 801 to execute any of the methods for sharing Prepare Statement in the first to fourth implementations of the present application.

Wherein, the memory and the processor are connected by a bus. The bus may include any number of interconnected buses and bridges, and connect various circuits of the one or more processors and the memory together. The bus can also connect various other circuits such as peripheral devices, voltage regulators, and power management circuits, which are well known in the art, and thus will not be described further herein. A bus interface provides an interface between the bus and a transceiver. The transceiver may be one element or plurality of elements, such as multiple receivers and transmitters, providing units for communicating with various other devices on the transmission medium. The data processed by the processor is transmitted on a wireless medium via the antenna, and further, the antenna also receives the data and transmits the data to the processor.

The processor manages the bus and general processings, and can also provide various functions, including timing, peripheral interfaces, voltage regulation, power management, and other control functions. The memory can be used to store data used by the processor when performing operations.

A seventh implementation of the present application relates to a computer readable storage medium storing a computer program. When the computer program is executable by a processor, any of the above method implementations is implemented.

That is, it will be appreciated for those skilled in the art that, all or part of the operations of the methods in the above implementations may be completed by a program instructing relevant hardware. The program is stored in a storage medium, including a number of instructions to enable a device (which may be a microcomputer, chip, etc.) or a processor to perform all or part of the operations of the methods in the implementations of the present application. The aforementioned storage media include various media that can store program codes such as: U disk, mobile hard disk, Read-Only Memory (ROM), Random Access Memory (RAM), magnetic disk or optical disk, and so on.

It will be appreciated for those skilled in the art that, the above implementations are exemplary implementations for implementing the present application. However, in practical applications, various changes may be made therein in form and details without departing from the spirit and scope of the present application.

## Claims

1. A method for sharing Prepare Statement applied to a network device, comprising:
receiving an execution request, wherein the execution request carries an identification of a global Prepare Statement object and execution parameters;
searching a global Prepare Statement object cache pool for the corresponding global Prepare Statement object according to the identification of the global Prepare Statement object to acquire the global Prepare Statement object, wherein the global Prepare Statement object is a compiled structured query language, SQL, statement; and
determining an execution plan according to the global Prepare Statement object and the execution parameters, and executing the determined execution plan.

2. The method for sharing Prepare Statement according to claim 1, wherein before receiving an execution request sent by a client, wherein the execution request carries the identification of the global Prepare Statement object and the execution parameters, the method further comprises:
receiving a prepared request, wherein the prepared request contains a structured query language, SQL, statement;
performing matching between the SQL statement and all global Prepare Statement objects in the global Prepare Statement object cache pool;
generating the global Prepare Statement object according to the SQL statement in a case that there is no global Prepare Statement object matched with the SQL statement, and inserting the generated global Prepare Statement object into the global Prepare Statement object cache pool;
generating the identification of the global Prepare Statement object and a count value, wherein the count value is a number of global Prepare Statement objects in the global Prepare Statement object cache pool; and
returning a creation success response, wherein the creation success response carries the identification of the global Prepare Statement object.

3. The method for sharing Prepare Statement according to claim 2, wherein, in a case that the network device is a middleware, after generating the global Prepare Statement object according to the SQL statement in a case that there is no global Prepare Statement object matched with the SQL statement, and inserting the generated global Prepare Statement object into the global Prepare Statement object cache pool, the method further comprises:
selecting an idle database connection from a connection pool to connect to a database;
sending the prepared request to the database using the database connection; and
receiving and saving the identification of the global Prepare Statement object generated by and returned from the database.

4. The method for sharing Prepare Statement according to claim 2 or 3, further comprising:
in a case that there is a global Prepare Statement object matched with the SQL statement, acquiring the identification of the matched global Prepare Statement object; and
returning a creation success response, wherein the creation success response carries the identification of the global Prepare Statement object.

5. The method for sharing Prepare Statement according to any one of claims 1 to 4, wherein, in a case that the network device is a middleware, determining the execution plan according to the global Prepare Statement object and the execution parameters and executing the determined execution plan comprises:
searching the global Prepare Statement object cache pool for the global Prepare Statement object and an identification of the global Prepare Statement object in a database according to the identification of the global Prepare Statement object;
generating an execution plan according to the global Prepare Statement object and the execution parameters;
determining a node of a database and execution parameters of the database according to the execution plan; and
sending the execution parameters of the database and the identification of the global Prepare Statement object in the database to the node of the database for the database to respond.

6. The method for sharing Prepare Statement according to claim 1 or 2, wherein, in a case that the network device is a database, determining an execution plan according to the global Prepare Statement object and the execution parameters and executing the determined execution plan comprises:
generating the execution plan according to the global Prepare Statement object and the execution parameters; and
performing operation on data according to the execution plan.

7. The method for sharing Prepare Statement according to any one of claims 1 to 6, further comprising:
receiving a close request, wherein the close request carries the structured query language, SQL, statement and the identification of the global Prepare Statement obj ect;
determining whether a count value is equal to a preset threshold, wherein the count value is a number of global Prepare Statement objects in the global Prepare Statement object cache pool; and
in a case that the count value is not equal to the preset threshold, returning a close success response.

8. The method for sharing Prepare Statement according to claim 7, further comprising:
in a case that the count value is equal to the preset threshold, searching the global Prepare Statement object cache pool for the global Prepare Statement object according to the identification of the global Prepare Statement object, and deleting the global Prepare Statement object according to the SQL statement.

9. A system for sharing Prepare Statement, comprising:
a client configured to send a prepared request to a middleware, receive a creation success response, and send an execution request to the middleware according to the creation success response; and
a network device configured to: receive the execution request, wherein the execution request carries an identification of a global Prepare Statement object and execution parameters; search a global Prepare Statement object cache pool for the global Prepare Statement object according to the identification of the global Prepare Statement object to acquire the global Prepare Statement object, wherein the global Prepare Statement object is a compiled structured query language, SQL, statement; and determine an execution instruction according to the global Prepare Statement object and the execution parameters, and execute the determined execution instruction.

10. A network device, comprising:
at least one processor; and
a memory communicatively connected to the at least one processor; wherein,
the memory stores instructions executable by the at least one processor, wherein, when executed by the at least one processor, the instructions enable the at least one processor to execute the method for sharing Prepare Statement according to any one of claims 1 to 8.

11. A computer readable storage medium having one or more programs stored therein which are executable by one or more processors to implement the method for sharing Prepare Statement according to any one of claims 1 to 8.
